# EUROPEAN PATENT SPECIFICATION

(11) **EP 3 424 247 B1**
(45) Date of publication and mention of the grant of the patent: **30.11.2022**
(21) Application number: 17773235.1
(22) Date of filing: 29.03.2017
(51) Int. Cl.: H04W 56/00

(54) **SYSTEM AND METHOD FOR SUPPORTING SYNCHRONIZATION IN SIDELINK COMMUNICATIONS**
SYSTEM UND VERFAHREN ZUR UNTERSTÜTZUNG DER SYNCHRONISATION IN EINER SIDELINK-KOMMUNIKATION
SYSTÈME ET PROCÉDÉ POUR PRENDRE EN CHARGE UNE SYNCHRONISATION DANS DES COMMUNICATIONS DE LIAISON LATÉRALE

(30) Priority: 31.03.2016 US 201662316277 P; 27.03.2017 US 201715469630
(43) Date of publication of application: 09.01.2019
(73) Proprietor: Huawei Technologies Co., Ltd., Longgang District Shenzhen, Guangdong 518129 (CN)
(72) Inventor: LIU, Bin, San Diego, CA 92130 (US); CAI, Yu, Beijing 100095 (CN); ZENG, Yongbo, Beijing 100095 (CN); WANG, Jian, Beijing 100095 (CN)
(74) Representative: Goddar, Heinz J.
(86) International application number: PCT/CN2017/078624
(87) International publication number: WO 2017/167205

(56) References cited:
- WO-A1-2014/183104
- WO-A1-2015/111851
- WO-A1-2015/116940
- WO-A1-2015/119429
- WO-A1-2015/119429
- WO-A1-2015/143170

## Description

### TECHNICAL FIELD

The present disclosure relates generally to a system and method for digital communications, and, in particular embodiments, to a system and method for supporting synchronization in sidelink communications.

### BACKGROUND

In general, two user equipments (UEs) that are synchronized to different timing sources will not be able to communicate with one another due to the timing difference between the timing sources. In vehicle to vehicle (V2V) communications, different timing sources, such as global navigation satellite system (GNSS) based timing, evolved NodeB (eNB) based timing, or local user equipment (UE) based timing, and so on, may be used. Specifically, an in-coverage (IC) UE, i.e., a UE that is operating within a coverage area of a GNSS or an eNB, and an out-of-coverage (OOC) UE, i.e., a UE that is not operating within the coverage area of a GNSS or an eNB, may have different timing which causes problems with UE communications that cross coverage edges or boundaries.

Therefore, there is a need for a system and method for supporting synchronization in V2V communications. Hence, V2V communications can smoothly transition across system boundaries, e.g., between IC and OOC areas or areas with different timing sources.

WO 2015/119429 A1 describes transmitting a synchronization signal for device-to-device (D2D) operation in a wireless communication system. A user equipment (UE) determines that it is out of coverage (OOC). Even though the UE is OOC, the UE continues to transmit a D2D synchronization signal for in-coverage under a specific condition.

WO 2015/116940 A1 describes a user equipment (UE) which is configured to synchronize with an independent synchronization source (I-SS) based on a first synchronization signal received from the I-SS. The UE is configured to determine whether a received signal strength from the I-SS is below a threshold value.

WO 2015/143170 A1 describes a wireless transmit receive unit (WTRU) operated in a first scheduling mode for device-to-device communication, wherein the WTRU may detect that a radio link failure (RLF) timer is running or has been started. The WTRU then switches from the first scheduling mode for device-to-device communication to a second scheduling mode for device-to-device communication in response to detecting that the radio link failure timer is running or has been started.

### SUMMARY

The present invention provides a method according to claim 1 and a user equipment according to claim 6. Example embodiments provide a system and method for supporting synchronization in sidelink communications.

### BRIEF DESCRIPTION OF THE DRAWINGS

For a more complete understanding of the present disclosure, and the advantages thereof, reference is now made to the following descriptions taken in conjunction with the accompanying drawings, in which:
Figure 1 illustrates an example communications system according to example embodiments presented herein;
Figure 2 illustrates an example communications system highlighting D2D synchronization according to example embodiments presented herein;
Figure 3 illustrates an example communications system highlighting IC and OOC areas according to example embodiments presented herein;
Figure 4 illustrates an example communications system highlighting a UE transitioning from OOC UE to IC UE according to example embodiments presented herein;
Figure 5 illustrates a flow diagram of example operations occurring in a UE as the UE transitions from OOC UE to IC UE according to example embodiments presented herein;
Figure 6 illustrates an example communications system highlighting a UE transitioning from IC UE to OOC UE according to example embodiments presented herein;
Figure 7 illustrates a flow diagram of example operations occurring in a UE as the UE transitions from IC UE to OOC UE according to a competitive example presented herein;
Figure 8 illustrates a block diagram of an embodiment processing system for performing methods described herein; and
Figure 9 illustrates a block diagram of a transceiver adapted to transmit and receive signaling over a telecommunications network according to example embodiments presented herein.

### DETAILED DESCRIPTION OF ILLUSTRATIVE EMBODIMENTS

The making and using of the presently example embodiments are discussed in detail below. It should be appreciated, however, that the present disclosure provides many applicable inventive concepts that can be embodied in a wide variety of specific contexts. The specific embodiments discussed are merely illustrative of specific ways to make and use the embodiments, and do not limit the scope of the disclosure.

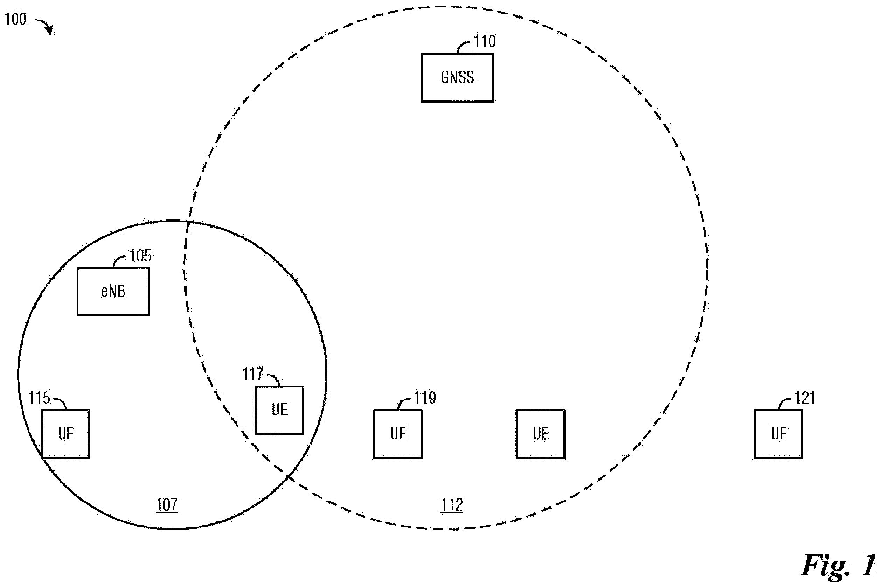

Figure 1 illustrates an example communications system 100. Communications system 100 includes a terrestrial communications network including an evolved NodeB (eNB) 105 and associated coverage area 107 and a global navigation satellite system (GNSS) 110, e.g., a global positioning system (GPS), and associated coverage area 112. Communications system 100 includes a plurality of user equipments (UEs), such as UE 115, UE 117, UE 119, and UE 121. Some of the UEs may communicate with one communications network, such as UE 115 and eNB 105 and UE 119 and GNSS 110, while some UEs may communicate with both communications network, such as UE 117 with eNB 105 and GNSS 110. Some UEs may not communicate with either communications network, such as UE 121. UEs, as used herein, may represent typical hand-held communications device, as well as communications devices that are part of a vehicle, such as a car, bus, or train, or communications devices of users riding in or on a vehicle. Furthermore, the UEs may also be roadside units (RSUs).

While it is understood that communications systems may employ multiple eNBs and GNSSs capable of communicating with a number of UEs, only one eNB, one GNSS, and a number of UEs are illustrated for simplicity.

In the Third Generation Partnership Project (3GPP) Long Term Evolution (LTE) Release-12 and Release-13 technical standards, device to device (D2D) synchronization techniques were presented. It is noted that V2V communications may be thought of as a further enhancement of D2D communications. In 3GPP LTE Release-12/13, IC UEs synchronized with eNBs and OOC UEs used sidelink synchronization information to synchronize with one another. The sidelink synchronization information includes a Sidelink Synchronization Signal (SLSS), timing information, as well as some additional configuration parameters (i.e., the MasterInformationBlock-SL (MIB-SL) message) and so on.

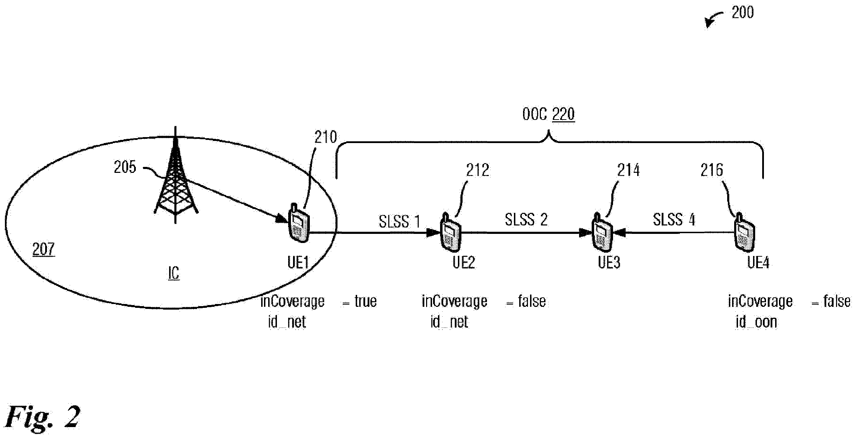

In 3GPP Technical Standards TS 36.331, Section 5.10.7.2, UEs may deliver eNB timing information to OOC UEs in certain scenarios. Figure 2 illustrates an example communications system 200 highlighting D2D synchronization. Communications system 200 includes an eNB 205 with coverage area 207. Operating within coverage area 207, and therefore, is an IC UE, is UE 210. According to 3GPP TS 36.331, Section 5.10.7.2, an UE (such as UE 210) will transmit synchronization information with eNB timing when a reference signal received power (RSRP) of eNB 205 falls below a threshold, i.e., UE 210 is a cell edge UE (CEU).

Also shown in Figure 2, are UEs 212, 214, and 216. These UEs are outside of coverage area 207 and in OOC 220, therefore, they may be referred to as OOC UEs. The OOC UEs may select a synchronization reference (SyncRef) UE according to priority rules as specified in the technical standards. As an illustrative example, UE 212 selects a SyncRef UE with eNB timing ("SLSS 1") with higher priority, while UE 214 cannot receive from SyncRef UE with eNB timing ("SLSS 1") and selects a SyncRef UE with hopped eNB timing ("SLSS 2") with higher priority. The priority may be indicated by an "inCoverage" field in the MIB-SL and an identifier of an SLSS (SLSSID), per 3GPP TS 36.331, Section 5.10.8.2).

In D2D, cell edge UEs deliver the eNB timing to the OOC area so that UEs that are in coverage (i.e., IC UEs) enable communications with proximal UEs that are out of coverage (i.e., OOC UEs). In 3GPP PC5-based vehicle to everything (V2X) deployments, GNSS is introduced as an important synchronization source. UEs can use GNSS-based synchronization. Agreements on synchronization for PC5-based V2V in a V2X study item (SI):
- GNSS or GNSS-equivalent at the highest priority of synchronization source for time and frequency when the vehicle UE directly receives GNSS or GNSS-equivalent with sufficient reliability and the UE does not detect any cell in any carrier. GNSS-equivalent includes synchronization signals sent by GNSS synced eNBs;
- eNB instructs vehicle UE to prioritize either eNB-based synchronization or GNSS or GNSS-equivalent at least when the eNB is in the carrier where the vehicle UE operates on PC5 V2V.

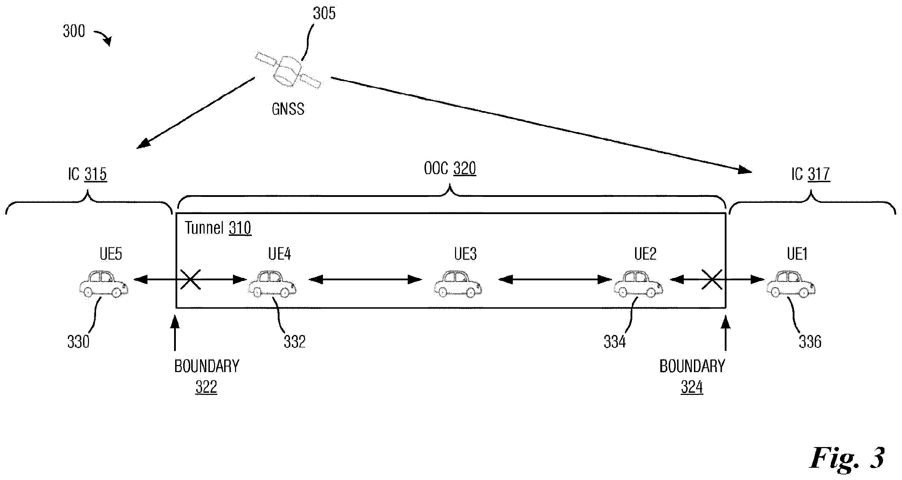

Figure 3 illustrates an example communications system 300 highlighting IC and OOC areas. Communications system 300 may be a GNSS that is supported by one or more satellites, such as satellite 305, or GNSS-equivalent devices. Within the coverage area of the one or more satellites is a tunnel 310. Because the signals of the one or more satellites are unlikely to penetrate tunnel 310, there is an OOC area in tunnel 310. While outside of tunnel 310 and in the coverage area of the one or more satellites (e.g., IC area 315 and IC area 317), UEs may be able to receive timing information from communications system 300 and are classified as IC UEs. However, the UEs that are inside tunnel 310 (e.g., OOC area 320), the UEs may not be able to receive timing information from communications system 300 and are classified as OOC UEs. IC UEs and OOC UEs, as well as IC areas and OOC areas, may be defined based on availability or lack of GNSS or GNSS-equivalent signals. If the UE detects the GNSS or GNSS-equivalent signals from a synchronization source meeting one or more criterion, it shall consider itself to be IC. If the UE cannot detect any GNSS or GNSS-equivalent signals from any synchronization source meeting one or more criterion, it shall consider itself to be OOC. The one or more criterion can be based on the measurement of signals from synchronization source, such as carrier-to-noise ratio, RSRP, reference signal received quality (RSRQ), or reliability of the signal, or a combination thereof. An IC UE may also be expressed as a UE having GNSS or GNSS-equivalent, or a UE is synced with GNSS or GNSS-equivalent. An OOC UE may also be expressed as a UE without GNSS or GNSS-equivalent, or a UE is not synced with GNSS or GNSS-equivalent.

As an alternative to GNSS or GNSS-equivalent synchronization sources, IC UEs and OOC UEs, as well as IC areas and OOC areas, may be defined based on the availability of eNB or cell signals or the lack thereof. In such a situation, if a UE detects that one or more signals from at least one eNB or cell on a frequency in which the UE is configured to perform sidelink operations meets one or more criterion, the UE considers itself to be IC and an IC UE. Conversely, if the UE fails to detect any signal that meets the one or more criterion, the UE considers itself to be OOC and an OOC UE. The one or more criterion can be based on the measurement of signals from synchronization source, such as carrier-to-noise ratio, RSRP, RSRQ, or reliability of the signal, or a combination thereof.

When a UE is OOC, the UE will select a SyncRef UE (if there is any), and the SyncRef UE will transmit synchronization information periodically. The synchronization information may include a Sidelink Synchronization Signal (SLSS), timing information and some additional configuration parameters (i.e., the MasterInformationBlock-SL (MIB-SL) message), and so on, in 3GPP LTE V2V communications systems. However, V2V timing may be different for IC UEs and OOC UEs. The timing difference would make it impossible for the UEs to communicate across the IC/OOC or OOC/IC boundary. A boundary (e.g., an IC/OOC boundary or an OOC/IC boundary) may be defined as a location where an IC UE is no longer able to detect GNSS or GNSS-equivalent signals from a synchronization source meeting the one or more criterion (IC/OOC boundary) or a location where an OOC UE is able to detect GNSS or GNSS-equivalent signals from any synchronization source meeting the one or more criterion (OOC/IC boundary). Referring back to Figure 3, boundary 322 exists between IC 315 and OOC 320 and boundary 324 exists between OOC 320 and IC 317. Boundary 322 would make it impossible for UE 330 to communicate with UE 332, while boundary 324 would make it impossible for UE 334 to communicate with UE 336. It is noted that although boundaries 322 and 324 are shown as coinciding with the start and the send of tunnel 310, actual boundaries depend on environmental conditions and may change over time. As an example, heavy clouds or rain can weaken a GNSS signal and cause boundaries to shift, enlarging OOC 320. As another example, the growth of shrubbery or trees about the openings of tunnel 310 may attenuate the GNSS signal and cause boundaries to shift, enlarging OOC 320. As yet another example, an eNB is added at the openings of tunnel 310 and the eNB transmits GNSS-equivalent signals into tunnel 310, the boundaries may shift, shrinking OOC 320.

Simply reusing the D2D techniques proposed in 3GPP technical standards TS 36.331 may not work, since UEs with GNSS timing transmit synchronization information when the RSRP of the GNSS signal is below a specified threshold. This situation is similar to what occurs with cell edge UEs. There is small probability that the above situation is triggered. In some cases, such as in a tunnel or an underground parking structure, there maybe a jump in the RSRP at a GNSS coverage edge, and in general, UEs move rapidly across a coverage edge boundary. Hence, a UE has very little time to transmit synchronization information with the GNSS timing information before it becomes OOC UE. However, a UE usually needs several SLSSs to obtain synchronization. It is therefore very likely that UEs out of GNSS coverage (OOC UEs) cannot synchronize to the UE transmitting the synchronization information with the GNSS timing before the UE loses the GNSS or GNSS-equivalent signal and becomes an OOC UE itself. Hence, the SLSS transmission discussion previously presented may not be effective in forwarding the synchronization information with the GNSS timing in PC5-based V2V.

According to an example embodiment, a system and method that provides synchronization information to align V2V timing of IC UEs and OOC UEs are presented. The OOC UEs which receive the synchronization information can maintain communication with proximal IC UEs.

According to an example embodiment, an UE transmits synchronization information (with GNSS timing information or GNSS-equivalent timing information transmitted by an eNB or a cell, or timing information transmitted by an eNB or a cell in a frequency configured for sidelink operation for the UE, for example) for a specified time T after the UE changes from OOC UE to IC UE. The UE may transmit the synchronization information for the specified time T after the UE changes from OOC UE to IC UE if the UE does not detect any other higher priority synchronization source or SyncRef UE.

Alternatively, the UE may transmit the synchronization information for the specified time T after the UE changes from OOC UE to IC UE if the UE does not detect any other synchronization source or SyncRef UE.

As the UE acquires the synchronization information, which may occur before or after the UE transitions into the IC area, the UE will transmit the synchronization information (or a modified version thereof that is derived from the acquired synchronization information received from the GNSS or GNSS-equivalent, eNB, cell, or E-UTRAN) for the specified time T. The modifications to the synchronization information may include changes to or the addition of the timing information, configuration parameters, identifiers for transmission, and so on. As an illustrative example, until specified time T has elapsed from when the UE is IC or the UE has acquired the synchronization information, the UE remains sufficiently close to the OOC area so that the synchronization information transmitted by the UE will propagate sufficiently far into the OOC area to assist the OOC UEs. The OOC UEs that receive the synchronization information can also transmit the synchronization information or adjusted synchronization information (derived from the synchronization information received from the UE, for example) further. The specified time T may be defined relative to when the UE acquires the synchronization information or when the UE changes from OOC to IC. The specified time T may be specified in a technical standard, by an operator of the communications system, configured by the network, eNB, cell, or E-UTRAN, or preconfigured.

As an alternative, instead of the specified time T, the UE will transmit the synchronization information for a specified distance D from where the UE acquired the synchronization information or from where the UE transitions from OOC to IC. As an illustrative example, as long as the UE remains within the specified distance D from where the UE acquired the synchronization information or from where the UE transitions from OOC to IC, its transmissions of the synchronization information or a modified version thereof may be able to propagate sufficiently far into the OOC area to assist OOC UEs. The OOC UEs that receive the synchronization information can also propagate the synchronization information or adjusted synchronization information (derived from the synchronization information received from the UE, for example) further. The specified distance D maybe specified in a technical standard, by an operator of the communications system, configured by the network, eNB, cell, or E-UTRAN, or preconfigured.

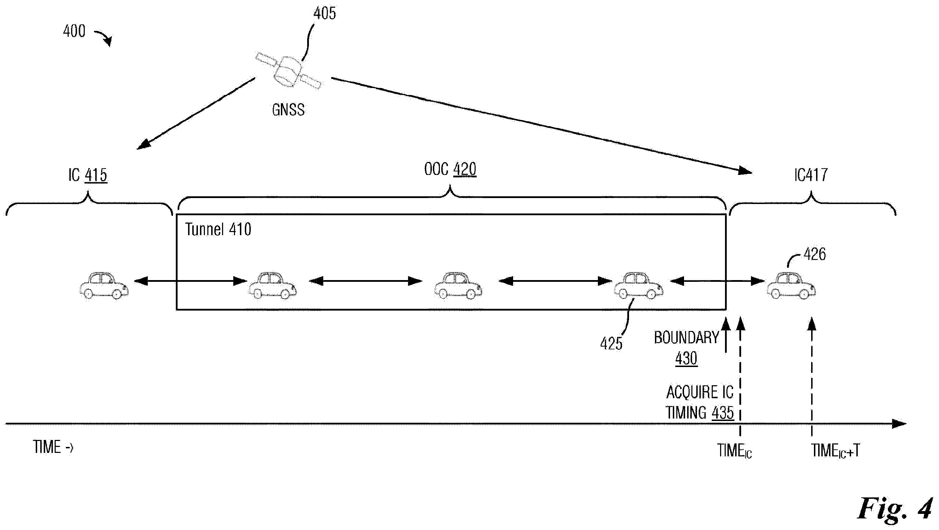

Figure 4 illustrates an example communications system 400 highlighting a UE transitioning from OOC to IC. Communications system 400 may be a GNSS that is supported by one or more satellites, such as satellite 405, or GNSS-equivalent devices, such as an eNB or cell. It is noted that although the description presented herein focuses on GNSS or GNSS-equivalents, the example embodiments presented herein are also operable with systems where synchronization signals are based on signals transmitted by eNBs, cells, E-UTRANs, and so forth. Therefore, the discussion of GNSS or GNSS-equivalents should not be construed as being limiting to either the scope or of the example embodiments. Within the coverage area of the one or more satellites is a tunnel 410. As a result of tunnel 410, there is a break in the coverage of the one or more satellites, resulting in an IC area 415, an OOC area 420, and an IC area 417. A UE 425 traversing tunnel 410 may cross boundary 430, which may be defined as where UE 425, which is an OOC UE in tunnel 410, becomes able to detect GNSS or GNSS-equivalent signals from any synchronization source meeting one or more criterion. Boundary 430 may or may not coincide with the end of tunnel 410. When UE 425 crosses boundary 430 (now shown as UE 426 to reduce confusion), UE 426 transitions from OOC to IC. At time TIME_{IC}, UE 426 may acquire synchronization information (event 435). Although TIME_{IC} is shown in Figure 4 as occurring after UE 426 crosses boundary 430, it may be possible that UE 426 is able to acquire the synchronization information prior to crossing boundary 430. Once UE 426 acquires the synchronization information, UE 426 will transmit the synchronization information or a modified version thereof for a specified time T (until TIME_{IC} + T, for example). The transmission of the synchronization information by UE 426 propagates back into OOC area 420 to provide OOC UEs with the synchronization information, which will help the OOC UEs to communicate with IC UEs. As discussed previously, instead of transmitting the synchronization information for the specified time T, UE 426 will transmit the synchronization information for the specified distance D. It is noted that in some situations, the time TIME_{IC} can also be the time UE 426 transitions from OOC to IC.

According to an example embodiment, a signal quality threshold or a signal quality criterion is used to determine if the UE will transmit the synchronization information. As an illustrative example, the UE will transmit the synchronization information only if the RSRP measurement, a RSRQ measurement, a carrier-to-noise ratio, a reliability of the synchronization is higher than a specified signal quality threshold or a signal quality criterion is fulfilled. The use of the specified signal quality threshold or criterion helps to prevent a situation where the UE transmits the synchronization information when the synchronization information/signals quality is poor.

According to an example embodiment, a timing difference threshold or a timing difference criterion is used to determine if the UE will transmit the synchronization information. As an illustrative example, the UE will compare the synchronization information acquired with its own local synchronization information and the UE will transmit the synchronization information only if the difference between the synchronization information acquired and its own local synchronization information is greater than a specified timing difference threshold. If the difference is less than the specified timing difference threshold, the local synchronization information of the UE (and the local synchronization information of the OOC UEs in the OOC area that the UE has just left) is within tolerable range and communications across the boundary can take place, therefore, the UE does not have to transmit the synchronization information. If the difference is greater than the specified timing difference threshold, then the local synchronization information of the UE (as well as the local synchronization information of the OOC UEs in the OOC area) is outside of the tolerable range and communications across the boundary cannot take place, therefore, the UE should transmit the synchronization information or a modified version thereof.

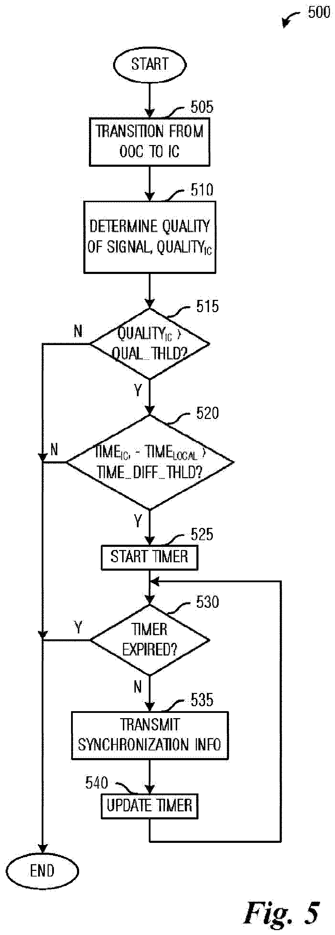

Figure 5 illustrates a flow diagram of example operations 500 occurring in a UE as the UE transitions from OOC to IC. Operations 500 may be indicative of operations occurring in a UE as the UE transitions from OOC to IC. In other words, the UE experienced a coverage change from OOC to IC.

Operations 500 begin with the UE transitioning from OOC to IC (block 505). Part of the transition from OOC to IC involves the UE receiving synchronization information that may be transmitted by a satellite of a GNSS, an eNB that is synced to a GNSS, and so on. It is noted that although the description presented herein focuses on GNSS or GNSS-equivalents, the example embodiments presented herein are also operable with systems where synchronization signals are based on signals transmitted by eNBs, cells, E-UTRANs, and so forth. Therefore, the discussion of GNSS or GNSS-equivalents should not be construed as being limiting to either the scope or of the example embodiments. Alternatively, the synchronization signal may be transmitted by an eNB that is not using GNSS timing. In such a situation, the eNB may provide a timing difference between the synchronization signals and the GNSS timing. The UE determines a quality of the signal carrying the synchronization information, QUALITY_{IC} (block 510). As an example, the UE determines a RSRP or RSRQ of the signal. The UE compares the quality of the signal with a signal quality threshold or signal quality criterion (block 515). As an illustrative example, an RSRP quality threshold maybe set at around -120 dBm, -110 dBm, -100 dBm, etc., while an RSRQ threshold maybe set at -20 dB, -19 dB, -18 dB, -17 dB, and so on. The actual values of the thresholds may be specified by a technical standard, an operator of the communications system, the network, a collaboration between the UEs and the network, and so on. If the quality of the signal does not exceed the signal quality threshold, operations 500 may end. Alternatively, the UE may return to block 510 to wait until the quality of the signal to improve. The quality of the signal may improve as the UE moves about.

If the quality of the signal is better than the signal quality threshold, the UE performs a check to determine if a difference between the synchronization information acquired and its local synchronization information is greater than a timing difference threshold or timing difference criterion (block 520). As an illustrative example, the timing difference is set as a fraction of the cyclic prefix, such as 1/2, 1/3, 1/4, etc., of the cyclic prefix. The actual value of the timing difference threshold may be specified by a technical standard, an operator of the communications system, the network, a collaboration between the UEs and the network, and so on. With this check, the UE may be checking to see if its local synchronization information is within acceptable tolerance of the synchronization information acquired. If the difference is less than the timing difference threshold, the UE does not transmit the synchronization information since the local synchronization information is within acceptable tolerance levels and due to the sharing of the local synchronization information, the OOC UEs in the OOC area share approximately the same local synchronization information. If the difference is greater than the timing difference threshold, the UE starts a timer (block 525). The timer may be an implementation of the UE transmitting the synchronization information for the specified time T after it transitions from OOC to IC or after it acquires the synchronization information or after it determines that the timing difference is greater than the timing difference threshold. The timer may be preconfigured to count from the specified time T down to 0, for example. As an illustrative example, the timer may be set to a number of radio frames, such as 10, 20, 30, and so on, frames or seconds, such as 10, 20, 30, or so milliseconds. The timer may be set back on the velocity of the UE, for example. The actual value of the timer may be specified by a technical standard, an operator of the communications system, the network, a collaboration between the UEs and the network, and so on. The UE performs a check to determine if the timer has expired (block 530). When the timer expires, it has been the specified time T since the UE transitioned from OOC to IC or after it acquires the synchronization information or after it determines that the timing difference is greater than the timing difference threshold.

If the timer has not expired, the UE transmits the synchronization information or a modified version thereof since the local synchronization information is not within acceptable tolerance levels (block 535). The UE updates the timer (block 540) and returns to block 530 to check if the timer has expired.

As an alternative, the UE may simply transmit the synchronization information or a modified version thereof for a specified time T without checking to determine if the signal quality meets the signal quality threshold. As another alternative, the UE may simply transmit the synchronization information or a modified version thereof for a specified time T without checking to determine if the local synchronization information is within tolerance of the synchronization information acquired. As yet another alternative, the UE may simply transmit the synchronization information or a modified version thereof for a specified time T without checking to determine if the signal quality meets the signal quality threshold and checking to determine if the local synchronization information is within tolerance of the synchronization information.

Alternatively, the UE uses a distance based metric to determine if it should transmit or continue to transmit the synchronization information or a modified version thereof. In such a situation, the timer may be replaced with a numerical value check that is based on a measured distance between the UE and a location where the UE transitioned from OOC to IC or where it acquires the synchronization information or where it determines that the timing difference is greater than the timing difference threshold. As an illustrative example, the distance may be set based on how quickly the UE is moving, and may be set as a function of how far the UE is expected to travel in the amount of time T set to the timer (discussed above). Examples of the distance may include 20, 30, 40, and so forth, meters. The actual value of the distance may be specified by a technical standard, an operator of the communications system, the network, a collaboration between the UEs and the network, and so on. As an example, GNSS position information or location information maintained by the UE may be used to generate the numerical value.

According to RAN4 assumptions for D2D operation and related analysis in 3GPP V2X, it takes about 2 minutes for GNSS timing to drift out of the normal cyclic prefix (CP). Therefore, synchronization may be maintained in the UE for several minutes after GNSS is lost.

According to an example embodiment, a UE transmits synchronization information (with GNSS timing information, for example) for a specified time T after the UE transitions from IC to OOC. After the UE transitions into OOC, the UE continues to transmit the synchronization information or a modified version thereof for the specified time T. Alternatively, after the UE transitions into OOC, if the UE doesn't detect any other higher priority synchronization source or SyncRef UE meeting a criterion, the UE continues to transmit the synchronization information or a modified version thereof for the specified time T. As an illustrative example, until specified time T has elapsed from when the UE transitioned into OOC, the UE transmits the synchronization information or a modified version thereof acquired prior to transitioning to OOC, with updates performed locally and based on local timing of the UE. The OOC UEs that receive the synchronization information can also propagate the synchronization information or adjusted synchronization information further. After the specified time T, the UE transmits synchronization information based on D2D rules. As an alternative, instead of the specified time T, the UE will transmit the synchronization information or a modified version thereof for a specified distance D from where the UE transitioned to OOC. After the distance D, the UE transmits synchronization information based on D2D rules.

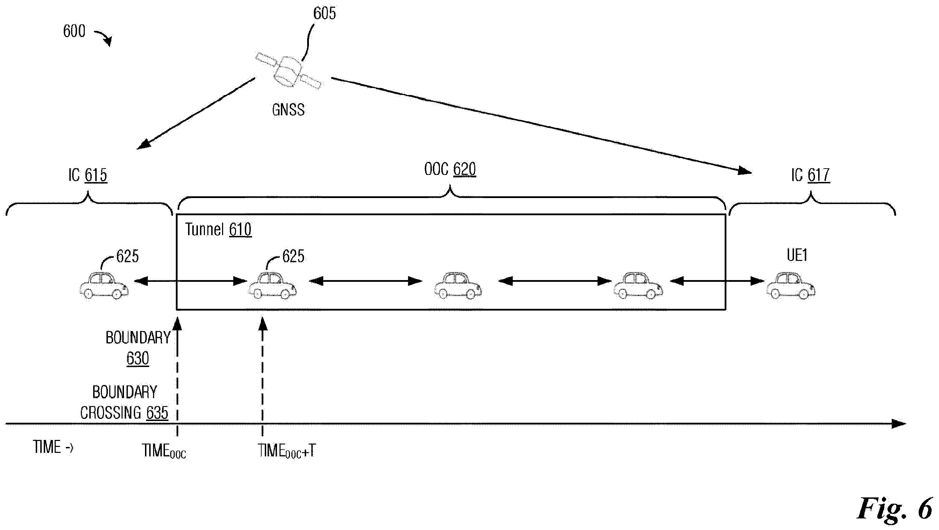

Figure 6 illustrates an example communications system 600 highlighting a UE transitioning from IC to OOC. Communications system 600 may be a GNSS that is supported by one or more satellites, such as satellite 605, or GNSS-equivalent devices, such as an eNB or cell. It is noted that although the description presented herein focuses on GNSS or GNSS-equivalents, the example embodiments presented herein are also operable with systems where synchronization signals are based on signals transmitted by eNBs, cells, E-UTRANs, and so forth. Therefore, the discussion of GNSS or GNSS-equivalents should not be construed as being limiting to either the scope or of the example embodiments. Within the coverage area of the one or more satellites is a tunnel 610. As a result of tunnel 610, there is a break in the coverage of the one or more satellites, resulting in an IC area 615, an OOC area 620, and an IC area 617. A UE 625 traversing towards tunnel 610 may cross boundary 630, which may be defined as where UE 625, which is an IC UE before tunnel 610, becomes unable to detect GNSS or GNSS-equivalent signals from any synchronization source meeting one or more criterion. Boundary 630 may or may not coincide with the end of tunnel 610. When UE 625 crosses boundary 630 (now shown as UE 626 to reduce confusion), UE 626 transitions from IC to OOC. At time TIME_{OOC}, UE 626 crosses boundary 630 and may lose IC timing (event 635). Once UE 626 loses IC timing, UE 626 will transmit the synchronization information (along with timing updates based on its own clock) or a modified version thereof for a specified time T (until TIME_{OOC} + T, for example). As an illustrative example, the specified time T is related to characteristics of the crystal oscillator of the UE, such as the clock drift of the crystal oscillator. If the clock drift is high, the specified time T may be low, while if the clock drift is low, the specified time may be high. Example values of T maybe on the order of tens of seconds to several minutes. The actual value of the time may be specified by a technical standard, an operator of the communications system, the network, a collaboration between the UEs and the network, and so on. As discussed previously, a UE that has recently lost IC timing may still maintain local IC timing for a period of time. However, the local IC timing becomes more inaccurate with the passage of time. The transmission of the synchronization information (including IC timing) by UE 626 propagates forward into OOC area 620 to provide OOC UEs with the IC timing, which will help the OOC UEs to communicate with IC UEs. A UE that has just recently lost IC timing may be given more priority than a UE that has lost IC timing a significant time ago. Therefore, a priority based technique may be implemented to enable OOC UEs to determine which synchronization information to use to update its own local synchronization information. As an illustrative example, the UE may be prioritized based on time since loss of IC timing, with the most recent UEs being given the highest priority or weight. As discussed previously, instead of transmitting the synchronization information or a modified version thereof for the specified time T, UE 626 will transmit the synchronization information or a modified version thereof for the specified distance D.

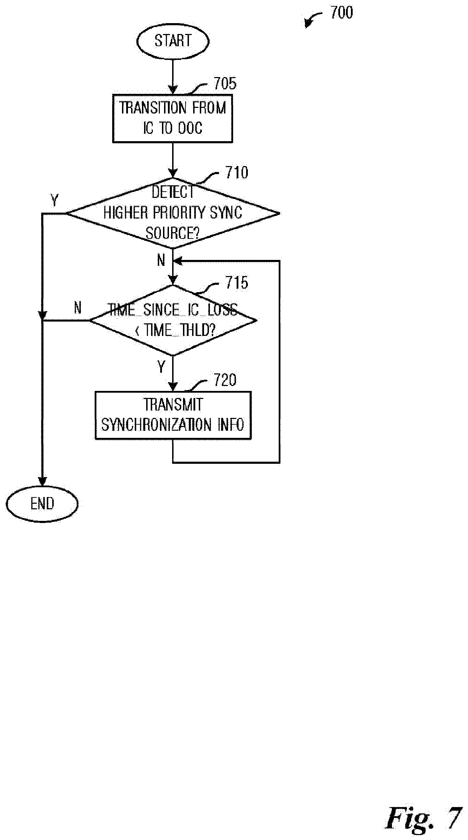

Figure 7 illustrates a flow diagram of example operations 700 occurring in a UE as the UE transitions from IC to OOC - in accordance with a competitive example. Operations 700 may be indicative of operations occurring in a UE as the UE transitions from IC to OOC. In other words, the UE experienced a coverage change from IC to OOC.

Operations 700 begin with the UE transitioning from IC to OOC (block 705). As a result of its transition from IC to OOC, the UE has stopped receiving synchronization information from the synchronization source. The UE performs a check to determine if it is able to detect a higher priority synchronization source or a SyncRef UE meeting a criterion (block 710). If the UE is able to detect a higher priority synchronization source or a SyncRef UE, operations 700 may terminate. If the UE is not able to detect a higher priority synchronization source or a SyncRef UE meeting a criterion, the UE performs a check to determine if the time since when it transitioned to OOC to a current time is less than a time threshold or a time criterion (block 715). As discussed previously, if the UE has loss IC timing for less than a certain amount of time, it is expected that the UE's local synchronization information will remain valid. If the time since when the UE transitioned to OOC to the current time is less than the time threshold, the UE transmits its local synchronization information, which may be an updated version of the synchronization information received from the synchronization source prior to transitioning to OOC (block 720) and the UE returns to block 715 to repeat the check. If the time since when the UE transitioned to OOC to the current time is more than the time threshold, operations 700 may terminate.

As an alternatively, the check to determine if the local synchronization information remains within tolerance starts when the UE transitions to OOC. As another alternative, the check to determine if the local synchronization information remains within tolerance starts when the UE stops receiving the synchronization information. As yet another alternatively, the UE does not check to determine if there is a higher priority synchronization source or SyncRef UE prior to transmitting the local synchronization information.

As aforementioned descriptions are focused on vehicle to vehicle communication, the similar procedures can also be applied to general device to device communications.

In a first aspect, the present application provides a method for providing synchronization information is provided. The method includes acquiring, by a UE, a first synchronization information from a synchronization source, and transmitting, by the UE, a second synchronization information derived from the first synchronization information when the UE experiences a coverage change.

According to a first embodiment of the method according to the first aspect, the second synchronization information is transmitted for a specified time period after the UE transitions from an OOC UE to an IC UE. According to a second embodiment of the method according to any preceding embodiment of the first aspect or the first aspect as such, the UE is the IC UE when the UE determines that the synchronization source meets at least one criterion, and the UE is the OOC UE when the UE is unable to detect any synchronization source meeting the at least one criterion. According to a third embodiment of the method according to any preceding embodiment of the first aspect or the first aspect as such, the at least one criterion comprises measurements of signals from the synchronization source meeting a measurement threshold. According to a fourth embodiment of the method according to any preceding embodiment of the first aspect or the first aspect as such, the measurements comprise at least one of a carrier-to-noise ratio, a reference signal received power (RSRP), a reference signal received quality (RSRQ), or a reliability of the signals.

According to a fifth embodiment of the method according to any preceding embodiment of the first aspect or the first aspect as such, the second synchronization information is transmitted until the UE is a specified distance away from a location where the UE transitions from the OOC UE to the IC UE. According to a sixth embodiment of the method according to any preceding embodiment of the first aspect or the first aspect as such, the second synchronization information is transmitted when a difference between the first synchronization information and local synchronization information of the UE is greater than a timing difference threshold. According to a seventh embodiment of the method according to any preceding embodiment of the first aspect or the first aspect as such, the second synchronization information is transmitted when a difference between the first synchronization information and local synchronization information of the UE is greater than a timing difference threshold and when a quality of signals from the synchronization source exceeds a quality threshold. According to an eighth embodiment of the method according to any preceding embodiment of the first aspect or the first aspect as such, the synchronization source includes at least one of a global navigation satellite system (GNSS), a GNSS-equivalent, an evolved NodeB (eNB), or a cell.

According to a ninth embodiment of the method according to any preceding embodiment of the first aspect or the first aspect as such, the first synchronization information is acquired before the UE transitions from an IC UE to an OOC UE, and the second synchronization information is transmitted after the UE transitions to the OOC UE. According to a tenth embodiment of the method according to any preceding embodiment of the first aspect or the first aspect as such, the second synchronization information is transmitted for a specified time period after the UE transitions to the OOC UE. According to an eleventh embodiment of the method according to any preceding embodiment of the first aspect or the first aspect as such, the synchronization source has an associated priority, and the second synchronization information is transmitted when the UE is unable to detect any other synchronization source with higher associated priority or a synchronization reference (SyncRef) UE. According to a twelfth embodiment of the method according to any preceding embodiment of the first aspect or the first aspect as such, the second synchronization information is transmitted until the UE is a specified distance away from where the UE transitioned from the IC UE to the OOC UE.

In a second aspect, the present application provides a method for providing synchronization information. The method includes acquiring, by a UE, a first synchronization information from a synchronization source, and transmitting, by the UE, a second synchronization information derived from the first synchronization information, the second synchronization information is transmitted when a quality of signals from the synchronization source meets a quality threshold.

According to a first embodiment of the method according to the second aspect, the quality of signals from the synchronization source is determined in accordance with at least one of a RSRP measurement, a carrier-to-noise ratio, a RSRQ measurement, and a reliability of the synchronization source.

According to an example embodiment, a signal quality threshold or a signal quality criterion is used to determine if the UE will transmit the synchronization information. As an illustrative example, the UE will transmit the synchronization information only if at least one of the RSRP measurement, a RSRQ measurement, a carrier-to-noise ratio, a reliability of the synchronization source is higher than a specified signal quality threshold or a signal quality criterion is fulfilled. The synchronization source comprises one of a GNSS, a GNSS-equivalent, an eNB, and a cell.

In a third aspect, the present application provides a UE. The UE includes one or more processors, and a computer readable storage medium storing programming for execution by the one or more processors. The programming including instructions to configure the UE to acquire a first synchronization information from a synchronization source, and transmit a second synchronization information derived from the first synchronization information when the UE experiences a coverage change.

According to a first embodiment of the UE according to the third aspect, the programming includes instructions to configure the UE to transmit the second synchronization information for a specified time period after the UE transitions from an OOC UE to an IC UE. According to a second embodiment of the UE according to any preceding embodiment of the third aspect or the third aspect as such, the programming includes instructions to configure the UE to transmit the second synchronization information until the UE is a specified distance away from a location where the UE transitions from the OOC UE to the IC UE. According to a third embodiment of the UE according to any preceding embodiment of the third aspect or the third aspect as such, he programming includes instructions to configure the UE to transmit the second synchronization information when a difference between the first synchronization information and local synchronization information of the UE is greater than a timing difference threshold.

According to a fourth embodiment of the UE according to any preceding embodiment of the third aspect or the third aspect as such, the programming includes instructions to configure the UE to transmit the second synchronization information when a quality of signals from the synchronization source meets a quality threshold. According to a fifth embodiment of the UE according to any preceding embodiment of the third aspect or the third aspect as such, the programming includes instructions to configure the UE to transmit the second synchronization information when a difference between the first synchronization information and local synchronization information of the UE is greater than a timing difference threshold and when a quality of signals from the synchronization source exceeds a quality threshold. According to a sixth embodiment of the UE according to any preceding embodiment of the third aspect or the third aspect as such, the first synchronization information is acquired before the UE transitions from an IC UE to an OOC UE, the second synchronization information is transmitted after the UE transitions to the OOC UE, and the programming includes instructions to configure the UE to transmit the second synchronization information for a specified time period after the UE transitions to the OOC UE.

According to a seventh embodiment of the UE according to any preceding embodiment of the third aspect or the third aspect as such, the first synchronization information is acquired before the UE transitions from an IC UE to an OOC UE, the second synchronization information is transmitted after the UE transitions to the OOC UE, the synchronization source has an associated priority, and the programming includes instructions to configure the UE to transmit the second synchronization information when the UE is unable detect any other synchronization source with higher associated priority or a synchronization reference (SyncRef) UE.

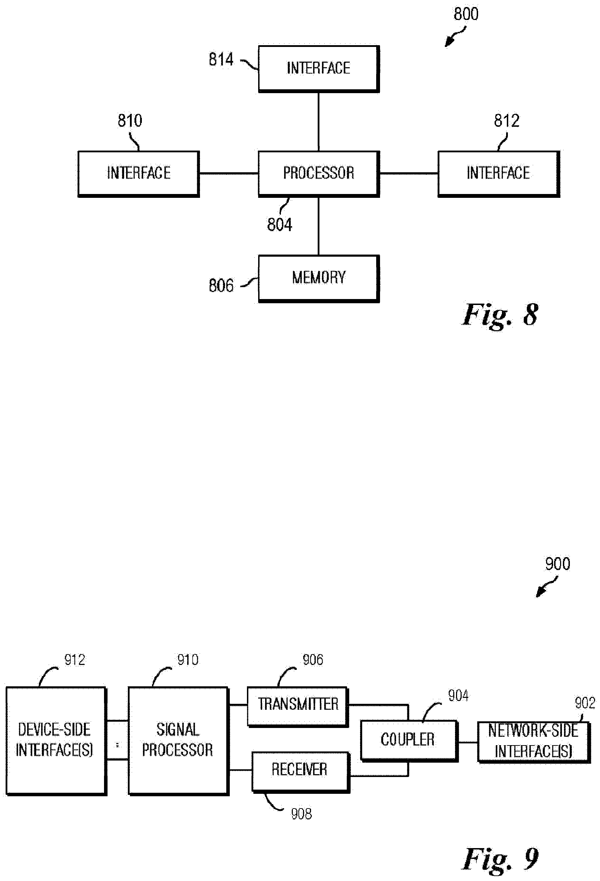

Figure 8 illustrates a block diagram of an embodiment processing system 800 for performing methods described herein, which maybe installed in a host device. As shown, the processing system 800 includes a processor 804, a memory 806, and interfaces 810-814, which may (or may not) be arranged as shown in Figure 8. The processor 804 may be any component or collection of components adapted to perform computations and/or other processing related tasks, and the memory 806 may be any component or collection of components adapted to store programming and/or instructions for execution by the processor 804. In an embodiment, the memory 806 includes a non-transitory computer readable medium. The interfaces 810, 812, 814 maybe any component or collection of components that allow the processing system 800 to communicate with other devices/components and/or a user. For example, one or more of the interfaces 810, 812, 814 may be adapted to communicate data, control, or management messages from the processor 804 to applications installed on the host device and/or a remote device. As another example, one or more of the interfaces 810, 812, 814 may be adapted to allow a user or user device (e.g., personal computer (PC), etc.) to interact/communicate with the processing system 800. The processing system 800 may include additional components not depicted in Figure 8, such as long term storage (e.g., non-volatile memory, etc.).

In some embodiments, the processing system 800 is included in a network device that is accessing, or part otherwise of, a telecommunications network. In one example, the processing system 800 is in a network-side device in a wireless or wireline telecommunications network, such as a base station, a relay station, a scheduler, a controller, a gateway, a router, an applications server, or any other device in the telecommunications network. In other embodiments, the processing system 800 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network.

In some embodiments, one or more of the interfaces 810, 812, 814 connects the processing system 800 to a transceiver adapted to transmit and receive signaling over the telecommunications network. Figure 9 illustrates a block diagram of a transceiver 900 adapted to transmit and receive signaling over a telecommunications network. The transceiver 900 may be installed in a host device. As shown, the transceiver 1000 comprises a network-side interface 902, a coupler 904, a transmitter 906, a receiver 908, a signal processor 910, and a device-side interface 912. The network-side interface 902 may include any component or collection of components adapted to transmit or receive signaling over a wireless or wireline telecommunications network. The coupler 904 may include any component or collection of components adapted to facilitate bi-directional communication over the network-side interface 902. The transmitter 906 may include any component or collection of components (e.g., up-converter, power amplifier, etc.) adapted to convert a baseband signal into a modulated carrier signal suitable for transmission over the network-side interface 902. The receiver 908 may include any component or collection of components (e.g., down-converter, low noise amplifier, etc.) adapted to convert a carrier signal received over the network-side interface 902 into a baseband signal. The signal processor 910 may include any component or collection of components adapted to convert a baseband signal into a data signal suitable for communication over the device-side interface(s) 912, or vice-versa. The device-side interface(s) 912 may include any component or collection of components adapted to communicate data-signals between the signal processor 910 and components within the host device (e.g., the processing system 800, local area network (LAN) ports, etc.).

The transceiver 900 may transmit and receive signaling over any type of communications medium. In some embodiments, the transceiver 900 transmits and receives signaling over a wireless medium. For example, the transceiver 900 maybe a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), etc.). In such embodiments, the network-side interface 902 comprises one or more antenna/radiating elements. For example, the network-side interface 902 may include a single antenna, multiple separate antennas, or a multi-antenna array configured for multi-layer communication, e.g., single input multiple output (SIMO), multiple input single output (MISO), multiple input multiple output (MIMO), etc. In other embodiments, the transceiver 900 transmits and receives signaling over a wireline medium, e.g., twisted-pair cable, coaxial cable, optical fiber, etc. Specific processing systems and/or transceivers may utilize all of the components shown, or only a subset of the components, and levels of integration may vary from device to device.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a processing unit or a processing module. Other steps may be performed by an acquiring unit/module. The respective units/modules may be hardware, software, or a combination thereof. For instance, one or more of the units/modules may be an integrated circuit, such as field programmable gate arrays (FPGAs) or application-specific integrated circuits (ASICs). Although the present disclosure and its advantages have been described in detail, it should be understood that various changes, substitutions and alterations can be made herein without departing from the scope of the disclosure as defined by the appended claims.

## Claims

1. A method (500) for providing synchronization information, the method comprising:
acquiring, by a user equipment, UE, a first synchronization information from a synchronization source; and
transmitting (535), by the UE, a second synchronization information derived from the first synchronization information when the UE experiences (505) a coverage change, a quality of signals from the synchronization source meets (515) a quality threshold, and a difference between the synchronization information acquired and its local synchronization information is greater than a timing difference which is set as a fraction of the cyclic prefix;
wherein the second synchronization information is transmitted for a specified time period after the UE transitions from an out of coverage, OOC, UE to an in coverage, IC, UE.

2. The method of claim 1, wherein the UE is the IC UE when the UE determines that the synchronization source meets at least one criterion, and wherein the UE is the OOC UE when the UE is unable to detect any synchronization source meeting the at least one criterion.

3. The method of claim 2, wherein the at least one criterion comprises measurements of signals from the synchronization source meeting a measurement threshold.

4. The method of claim 3, wherein the measurements comprise at least one of a carrier-to-noise ratio, a reference signal received power, RSRP, a reference signal received quality, RSRQ, or a reliability of the signals.

5. The method of claim 1, wherein the quality of signals from the synchronization source is determined in accordance with at least one of a reference signal received power, RSRP, measurement, a carrier-to-noise ratio, a reference signal received quality, RSRQ, measurement, and a reliability of the synchronization source.

6. A user equipment, UE, comprising:
one or more processors (804); and
a computer readable storage medium (806) storing programming for execution by the one or more processors, the programming including instructions to configure the UE to:
acquire a first synchronization information from a synchronization source, and
transmit a second synchronization information derived from the first synchronization information when the UE experiences a coverage change, a quality of signals from the synchronization source meets a quality threshold, and a difference between the synchronization information acquired and its local synchronization information is greater than a timing difference which is set as a fraction of the cyclic prefix;
wherein the programming includes instructions to configure the UE to transmit the second synchronization information for a specified time period after the UE transitions from an out of coverage, OOC, UE to an in coverage, IC, UE.

7. The UE of claim 6, wherein the programming includes instructions to configure the UE to transmit the second synchronization information until the UE is a specified distance away from a location where the UE transitions from the OOC UE to the IC UE.

8. The UE of claim 6, wherein the programming includes instructions to configure the UE to transmit the second synchronization information when a difference between the first synchronization information and local synchronization information of the UE is greater than a timing difference threshold.

9. The UE of claim 6, wherein the programming includes instructions to configure the UE to transmit the second synchronization information when a difference between the first synchronization information and local synchronization information of the UE is greater than a timing difference threshold and when a quality of signals from the synchronization source exceeds a quality threshold.

10. The UE of claim 6, wherein the first synchronization information is acquired before the UE transitions from an IC UE to an OOC UE, wherein the second synchronization information is transmitted after the UE transitions to the OOC UE, and wherein the programming includes instructions to configure the UE to transmit the second synchronization information for a specified time period after the UE transitions to the OOC UE.

11. The UE of claim 6, wherein the first synchronization information is acquired before the UE transitions from an IC UE to an OOC UE, and wherein the second synchronization information is transmitted after the UE transitions to the OOC UE, and wherein the synchronization source has an associated priority, and wherein the programming includes instructions to configure the UE to transmit the second synchronization information when the UE is unable detect any other synchronization source with higher associated priority or a synchronization reference, SyncRef, UE.

## Patentansprüche

1. Verfahren (500) zum Bereitstellen von Synchronisationsinformationen, wobei das Verfahren Folgendes umfasst:
Erfassen einer ersten Synchronisationsinformation von einer Synchronisationsquelle durch eine Benutzerausrüstung, UE, und
Übertragen (535) einer zweiten Synchronisationsinformation, die von der ersten Synchronisationsinformation abgeleitet wird, durch die UE, wenn die UE eine Abdeckungsveränderung erfährt (505), eine Güte der Signale von der Synchronisationsquelle einen Gütegrenzwert erfüllt (515) und eine Differenz zwischen der erfassten Synchronisationsinformation und ihrer lokalen Synchronisationsinformation größer als eine zeitliche Differenz ist, die als ein Bruchteil des zyklischen Präfix eingestellt ist,
wobei die zweite Synchronisationsinformation über eine spezifizierte Zeitspanne nach dem Übergang der UE von einer UE außerhalb der Abdeckung, OOC, zu einer UE innerhalb der Abdeckung, IC, übertragen wird.

2. Verfahren nach Anspruch 1, wobei die UE die IC-UE ist, wenn die UE bestimmt, dass die Synchronisationsquelle mindestens ein Kriterium erfüllt, und wobei die UE die OOC-UE ist, wenn die UE nicht in der Lage ist, eine Synchronisationsquelle zu erkennen, die das mindestens eine Kriterium erfüllt.

3. Verfahren nach Anspruch 2, wobei das mindestens eine Kriterium Messwerte von Signalen von der Synchronisationsquelle umfasst, die einen Messwertgrenzwert erfüllen.

4. Verfahren nach Anspruch 3, wobei die Messwerte mindestens eines von einem Träger-Rausch-Verhältnis, einer Leistung des empfangenen Referenzsignals, RSRP, einer Güte des empfangen Referenzsignals, RSRQ, oder einer Verlässlichkeit des Signals umfasst.

5. Verfahren nach Anspruch 1, wobei die Güte von Signalen von der Synchronisationsquelle gemäß mindestens einem von einem Messwert der Leistung des empfangenen Referenzsignals, RSRP, einem Träger-Rausch-Verhältnis, einem Messwert der Güte des empfangen Referenzsignals, RSRQ, oder einer Verlässlichkeit der Synchronisationsquelle bestimmt wird.

6. Benutzerausrüstung, UE, Folgendes umfassend:
einen oder mehrere Prozessoren (804) und
ein computerlesbares Speichermedium (806), das Programmierung zum Ausführen durch den einen oder die mehreren Prozessoren speichert, wobei die Programmierung Anweisungen zum Konfigurieren der UE für Folgendes beinhaltet:
Erfassen einer ersten Synchronisationsinformation von einer Synchronisationsquelle und
Übertragen einer zweiten Synchronisationsinformation, die von der ersten Synchronisationsinformation abgeleitet wird, wenn die UE eine Abdeckungsveränderung erfährt, eine Güte der Signale von der Synchronisationsquelle einen Gütegrenzwert erfüllt und eine Differenz zwischen der erfassten Synchronisationsinformation und ihrer lokalen Synchronisationsinformation größer als eine zeitliche Differenz ist, die als ein Bruchteil des zyklischen Präfix eingestellt ist,
wobei die Programmierung Anweisungen zum Konfigurieren der UE zum Übertragen der zweiten Synchronisationsinformation über eine spezifizierte Zeitspanne nach dem Übergang der UE von einer UE außerhalb der Abdeckung, OOC, zu einer UE innerhalb der Abdeckung, IC, beinhaltet.

7. UE nach Anspruch 6, wobei die Programmierung Anweisungen zum Konfigurieren der UE beinhaltet, die zweiten Synchronisationsinformation zu übertragen, bis sich die UE eine spezifizierte Strecke weg von einer Position befindet, an der die UE von der OOC-UE zur IC-UE übergeht.

8. UE nach Anspruch 6, wobei die Programmierung Anweisungen zum Konfigurieren der UE zum Übertragen der zweiten Synchronisationsinformation beinhaltet, wenn eine Differenz zwischen der ersten Synchronisationsinformation und einer lokalen Synchronisationsinformation der UE größer als ein Grenzwert der zeitlichen Differenz ist.

9. UE nach Anspruch 6, wobei die Programmierung Anweisungen zum Konfigurieren der UE zum Übertragen der zweiten Synchronisationsinformation beinhaltet, wenn eine Differenz zwischen der ersten Synchronisationsinformation und einer lokalen Synchronisationsinformation der UE größer als ein Grenzwert der zeitlichen Differenz ist und wenn eine Güte von Signalen von der Synchronisationsquelle einen Gütegrenzwert überschreitet.

10. UE nach Anspruch 6, wobei die erste Synchronisationsinformation erfasst wird, bevor die UE von einer IC-UE in eine OOC-UE übergeht, wobei die zweite Synchronisationsinformation übertragen wird, nachdem die UE in die OOC-UE übergegangen ist, und wobei die Programmierung Anweisungen zum Konfigurieren der UE zum Übertragen der zweiten Synchronisationsinformation für eine spezifizierte Zeitspanne nach dem Übergang der UE zur OOC-UE beinhaltet.

11. UE nach Anspruch 6, wobei die erste Synchronisationsinformation erfasst wird, bevor die UE von einer IC-UE zu einer OOC-UE übergeht, und wobei die zweite Synchronisationsinformation übertragen wird, nachdem die UE zur OOC-UE übergegangen ist, und wobei die Synchronisationsquelle eine zugewiesene Priorität aufweist und wobei die Programmierung Anweisungen zum Konfigurieren der UE zum Übertragen der zweiten Synchronisationsinformation beinhaltet, wenn die UE nicht in der Lage ist, eine andere Synchronisationsquelle mit einer höheren zugewiesenen Priorität oder eine Synchronisationsreferenz-, SncRef-,UE zu erkennen.

## Revendications

1. Procédé (500) de fourniture d'informations de synchronisation, le procédé comportant :
l'acquisition, par un équipement d'utilisateur, UE, d'une première information de synchronisation à partir d'une source de synchronisation ; et
l'émission (535), par l'UE, d'une seconde information de synchronisation tirée de la première information de synchronisation lorsque l'UE subit (505) un changement de couverture, qu'une qualité de signaux provenant de la source de synchronisation satisfait (515) un seuil de qualité, et qu'une différence entre les informations de synchronisation acquises et ses informations de synchronisation locales est supérieure à une différence de rythme qui est réglée à une fraction du préfixe cyclique ;
la seconde information de synchronisation étant émise pendant un laps de temps spécifié après que l'UE est passé d'un UE hors couverture, OOC, à un UE à portée de couverture, IC.

2. Procédé selon la revendication 1, l'UE étant l'UE IC lorsque l'UE détermine que la source de synchronisation satisfait au moins un critère, et l'UE étant l'UE OOC lorsque l'UE ne peut détecter aucune source de synchronisation satisfaisant le ou les critères.

3. Procédé selon la revendication 2, le ou les critères comportant des mesures de signaux provenant de la source de synchronisation satisfaisant un seuil de mesure.

4. Procédé selon la revendication 3, les mesures comportant au moins une mesure parmi un rapport porteuse-bruit, une puissance du signal de référence reçu, RSRP, une qualité du signal de référence reçu, RSRQ, et une fiabilité des signaux.

5. Procédé selon la revendication 1, la qualité de signaux provenant de la source de synchronisation étant déterminée en fonction d'au moins une grandeur parmi une mesure de puissance du signal de référence reçu, RSRP, un rapport porteuse-bruit, une mesure de qualité du signal de référence reçu, RSRQ, et une fiabilité de la source de synchronisation.

6. Équipement d'utilisateur, UE, comportant :
un ou plusieurs processeurs (804) ; et
un support (806) de stockage lisible par ordinateur conservant une programmation destinée à être exécutée par le ou les processeurs, la programmation comprenant des instructions servant à configurer l'UE pour :
acquérir une première information de synchronisation à partir d'une source de synchronisation, et
émettre une seconde information de synchronisation tirée de la première information de synchronisation lorsque l'UE subit un changement de couverture, qu'une qualité de signaux provenant de la source de synchronisation satisfait un seuil de qualité, et qu'une différence entre les informations de synchronisation acquises et ses informations de synchronisation locales est supérieure à une différence de rythme qui est réglée à une fraction du préfixe cyclique ;
la programmation comprenant des instructions servant à configurer l'UE pour émettre la seconde information de synchronisation pendant un laps de temps spécifié après que l'UE est passé d'un UE hors couverture, OOC, à un UE à portée de couverture, IC.

7. UE selon la revendication 6, la programmation comprenant des instructions servant à configurer l'UE pour émettre la seconde information de synchronisation jusqu'à ce que l'UE se trouve à une distance spécifiée d'un lieu où l'UE passe de l'UE OOC à l'UE IC.

8. UE selon la revendication 6, la programmation comprenant des instructions servant à configurer l'UE pour émettre la seconde information de synchronisation lorsqu'une différence entre la première information de synchronisation et une information de synchronisation locale de l'UE est supérieure à un seuil de différence de rythme.

9. UE selon la revendication 6, la programmation comprenant des instructions servant à configurer l'UE pour émettre la seconde information de synchronisation lorsqu'une différence entre la première information de synchronisation et une information de synchronisation locale de l'UE est supérieure à un seuil de différence de rythme et lorsqu'une qualité de signaux provenant de la source de synchronisation dépasse un seuil de qualité.

10. UE selon la revendication 6, la première information de synchronisation étant acquise avant que l'UE passe d'un UE IC à un UE OOC, la seconde information de synchronisation étant émise après que l'UE est passé à l'UE OOC, et la programmation comprenant des instructions servant à configurer l'UE pour émettre la seconde information de synchronisation pendant un laps de temps spécifié après que l'UE est passé à l'UE OOC.

11. UE selon la revendication 6, la première information de synchronisation étant acquise avant que l'UE passe d'un UE IC à un UE OOC, et la seconde information de synchronisation étant émise après que l'UE est passé à l'UE OOC, et une priorité étant associée à la source de synchronisation, et la programmation comprenant des instructions servant à configurer l'UE pour émettre la seconde information de synchronisation lorsque l'UE ne parvient pas à détecter une quelconque autre source de synchronisation dont la priorité associée est plus élevée ou un UE de référence de synchronisation, SyncRef.
